# EUROPEAN PATENT APPLICATION

(11) **EP 4 726 841 A1**
(43) Date of publication of application: **15.04.2026**
(21) Application number: 25206911.7
(22) Date of filing: 06.10.2025
(51) Int. Cl.: H01M 10/0569, H01M 50/417, H01M 50/42, H01M 50/423, H01M 50/434, H01M 50/451, H01M 50/457, H01M 50/46

(54) **RECHARGEABLE BATTERY AND BATTERY PACK INCLUDING THE SAME**

(30) Priority: 10.10.2024 KR 20240137997; 29.09.2025 KR 20250141129
(71) Applicant: SAMSUNG SDI CO., LTD., Yongin-si, Gyeonggi-do 17084 (KR)
(72) Inventor: LEE, Sang Min, 16678 Suwon-si (KR); CHO, Sang Hyuk, 16678 Suwon-si (KR); SHIN, Bo Ra, 16678 Suwon-si (KR); MOON, Jung Jin, 16678 Suwon-si (KR); KANG, Se Yeong, 16678 Suwon-si (KR)
(74) Representative: Maiwald GmbH

(57) **Abstract**

The present disclosure relates to a rechargeable battery and a battery pack including the rechargeable battery. The rechargeable battery includes a case having an open portion, an electrode assembly and an electrolyte accommodated in the case, and a cap-up in the open portion. The electrode assembly includes a first electrode plate, a second electrode plate, and a separator between the first electrode plate and the second electrode plate. The separator includes a base and a coating layer located on at least one surface of the base. A sum of machine direction (MD) elongation rate and transverse direction (TD) elongation rate of the base is 200% or less. A sum of MD tensile strength and TD tensile strength of the base is 4,000 kgf/cm² or less. The coating layer includes a binder, and the binder includes one or more of an aramid-based resin and an acrylic resin.

## Description

### Field of the Disclosure

The present disclosure relates to a rechargeable battery, and to a battery pack including the rechargeable battery.

### Discussion of Related Art

With increasing presence of electronic devices that use batteries such as, e.g., mobile phones, laptop computers, electric vehicles, and the like, the demand for rechargeable batteries with high energy density and high capacity is increasing. Accordingly, improving the performance of rechargeable lithium batteries may be advantageous.

A rechargeable lithium battery typically includes a positive electrode and a negative electrode including an active material which allows for intercalation and deintercalation of lithium ions and an electrolyte, and produces electrical energy through an oxidation-reduction reaction taking place when the lithium ions are intercalated and deintercalated between the positive electrode and the negative electrode.

Due to the demand for rechargeable lithium batteries with higher capacity and higher output, it is advantageous to decrease the thickness of separators. High strength is advantageous for separators to reduce or suppress a short circuit during a battery assembly process and to reinforce battery safety such as, e.g., safety against collisions.

### SUMMARY

One example embodiment is directed to providing a rechargeable battery, and a battery pack including the rechargeable battery with improved collision characteristics.

Another example embodiment is directed to providing a rechargeable battery, and a battery pack including the rechargeable battery with improved adhesive strength between a separator and a pole plate.

However, objectives of the present disclosure are not limited to the above-mentioned objectives, and other unmentioned objectives may be understood by those of ordinary skill in the art from the description of the disclosure given below.

A rechargeable battery according to one example embodiment includes a case having an open portion, an electrode assembly and an electrolyte accommodated in the case, and a cap-up disposed in the open portion. The electrode assembly includes a first electrode plate, a second electrode plate, and a separator between the first electrode plate and the second electrode plate. The separator includes a base and a coating layer located on at least one surface of the base. A sum of machine direction (MD) elongation rate and transverse direction (TD) elongation rate of the base is about 200% or less, and a sum of MD tensile strength and TD tensile strength of the base is about 4,000 kgf/cm² or less. The coating layer includes a binder that includes one or more of an aramid-based resin and an acrylic resin. The electrolyte includes about 20 vol% or more of ethyl propionate or ethylene carbonate.

### BRIEF DESCRIPTION OF THE DRAWINGS

The drawings submitted herewith illustrate example embodiments of the present disclosure as examples, and enable technical concepts of the present disclosure to be further understood together with the detailed description of the disclosure given below, and therefore the present disclosure should not be interpreted as being limited to the drawings.
FIG. 1 is a perspective view schematically illustrating a configuration of a battery pack according to various example embodiments of the present disclosure.
FIG. 2 is a perspective view schematically illustrating a configuration of a rechargeable battery according to an example embodiment of the present disclosure.
FIG. 3 is a cross-sectional view schematically illustrating the configuration of the rechargeable battery according to an example embodiment of the present disclosure.
FIG. 4 is for describing a relationship between a short-circuit area (X-axis) and a heating value (Y-axis) at the time of evaluation of collision characteristics of a separator.

### DETAILED DESCRIPTION

Hereinafter, example embodiments of the present disclosure are described in detail with reference to the accompanying drawings. Terms or words used in the present specification and claims should not be construed as being limited to general or dictionary meanings, and should be interpreted with meanings and concepts consistent with the technical spirit of the present disclosure on the basis of the principle that define the concept of a term to best describe the inventive aspects of the disclosure. Therefore, the example embodiments described herein and configurations shown in the drawings are merely some of the example embodiments of the present disclosure. Accordingly, it should be understood that various equivalents and modifications that can replace the example embodiments may be present at the time of filing the present application. Also, the expressions "comprise," "include," "comprising," and/or "including" used in this specification specify the presence of mentioned shapes, numbers, steps, operations, members, elements, and/or groups thereof, and do not exclude the presence or addition of one or more other shapes, numbers, steps, operations, members, elements, and/or groups thereof. In addition, when describing example embodiments of the present disclosure, the expressions "can" and "may" may include "one or more example embodiments of the present disclosure."

In addition, in order to help understanding of the disclosure, the accompanying drawings are not drawn to scale, and the dimensions of some components may be exaggerated. The same reference numerals may be assigned to the same components in different embodiments.

When two compared objects are mentioned as being "the same," the two objects are "substantially the same." Being substantially the same may include a case of having a variation that is considered low in the art, for example, a variation within 5%. Also, when a certain parameter is described as being substantially uniform in a predetermined or desired region, this may mean that the parameter is substantially uniform from an average perspective.

Although terms such as "first" and "second" are used to describe various components, of course, the components are not limited by the terms. The terms are only used to distinguish one component from another component, and of course, a first component may also be a second component unless particularly stated otherwise.

Throughout the specification, each component may be singular or plural unless particularly stated otherwise.

When an arbitrary configuration is described as being disposed "above (or below)" a component or "on (or under)" a component, this may mean not only that the arbitrary configuration is disposed in contact with an upper surface (or lower surface) of the component, but also that another configuration may be interposed between the component and the arbitrary configuration disposed on (or under) the component.

Also, when a certain component is described as being "connected," "coupled," or "linked" to another component, it should be understood that, although the components may be directly connected or linked to each other, another component may be "interposed" between the two components, or the two components may be "connected." "coupled," or "linked" to each other through another component. In addition, when a certain part is described as being electrically coupled to another part, this not only includes a case in which the two parts are directly connected, but also includes a case in which the two parts are connected with another device disposed therebetween.

Throughout the specification, "A and/or B" means A, B, or "A and B" unless particularly stated otherwise. That is, the term "and/or" includes any and all combinations of a plurality of listed items. "C to D" means larger than or equal to C and smaller than or equal to D, unless particularly stated otherwise.

When phrases such as "at least one of A, B, and C," "at least one of A, B, or C," "at least one selected from the group consisting of A, B, and C," and "at least one selected from A, B, and C" are used in designating a list of elements A, B, and C, the phrases may indicate any and all suitable combinations.

The term "use" may be considered a synonym of the term "utilize." As used in this specification, the terms "substantially," "approximately," and similar terms are used as approximate terms but are not used as degree terms, and these terms are for taking into account inherent deviations of measured or calculated values evident to those skilled in the art.

Although the terms "first," "second," "third," and the like, may be used herein to describe various components, elements, regions, layers and/or sections, these components, elements, regions, layers and/or sections should not be limited by these terms. These terms may be used only to distinguish one element, component, region, layer, or section from another element, component, region, layer, or section. Thus, a first element, component, region, layer, or section discussed below could be termed a second element, component, region, layer, or section without departing from the teachings of the example embodiments.

Spatially relative terms, such as "beneath," "below," "lower," "above," "upper" and the like, may be used herein for ease of description to describe one element or feature's relationship to another element(s) or feature(s) as illustrated in the figures. The spatially relative positions are intended to encompass different orientations of the device in use or operation in addition to the orientation depicted in the figures. For example, when the device in the figures is turned over, elements described as "below" or "beneath" other elements would then be oriented "above" the other elements. Thus, the term "below" can encompass an orientation of both above and below.

The terms used in the present specification are for describing the example embodiments of the present disclosure and are not intended to limit the present disclosure.

Hereinafter, a rechargeable battery and a battery pack including the same according to various example embodiments of the present disclosure is described with reference to the accompanying drawings. In this process, thicknesses of lines or sizes of components illustrated in the drawings may be exaggerated for clarity and convenience of description. Also, terms used below are terms defined in consideration of functions in the present disclosure and may be changed according to an intention or customary practice of a user or an operator. Therefore, the terms should be defined based on the content throughout the present specification.

In the present specification, "particle size D50" is an average particle size that indicates a size of a particle with a cumulative volume of 50 vol% in a particle size distribution. The particle size distribution may be measured by methods known to those skilled in the art. For example, the particle size distribution may be measured using a particle size analyzer, a transmission electron microscope photograph, or a scanning electron microscope photograph. As another method, a value of D50 may be obtained by measuring the particle size distribution using a measuring device using dynamic light-scattering, performing data analysis to count the number of particles for each particle size range, and then calculating the particle size distribution therefrom. Alternatively, the particle size distribution may be measured using a laser diffraction method. When measuring the particle size distribution using a laser diffraction method, particles to be measured may be dispersed in a dispersion medium, introduced into a commercially available laser diffraction particle diameter measurement apparatus (for example, MT3000 of Microtrac, Inc.), and irradiated with ultrasonic waves of about 28 kHz at an output of 60 W, and then D50 may be calculated based on 100% of a particle size distribution in the measurement apparatus.

The particle size may be a particle diameter.

In the present specification, when a numerical value range is stated, "X to Y" indicates X or more and Y or less (X ≤ value ≤ Y).

When the term "about" is used in this specification in connection with a numerical value, it is intended that the associated numerical value include a tolerance of ±10% around the stated numerical value. When ranges are specified, the range includes all values therebetween such as increments of 0.1%.

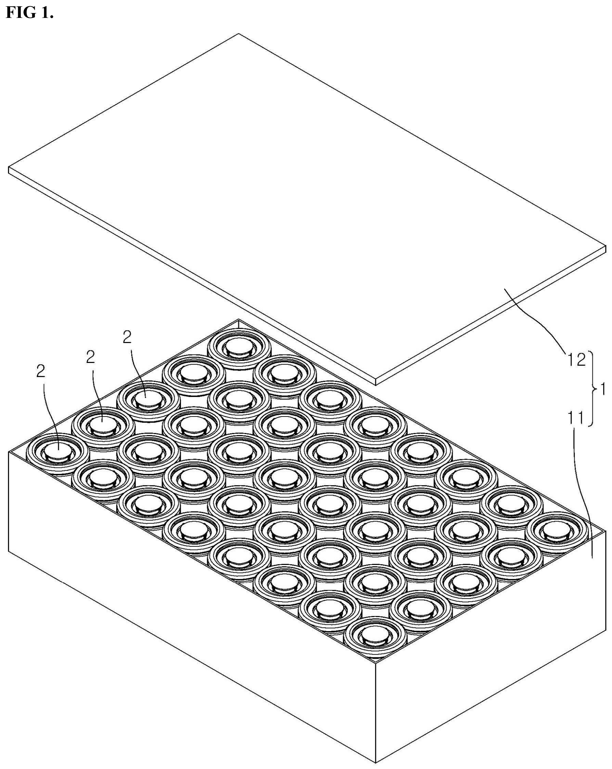

FIG. 1 is a perspective view schematically illustrating a configuration of a battery pack according to various example embodiments of the present disclosure.

Referring to FIG. 1, a battery pack according to various example embodiments includes a housing 1 and a rechargeable battery 2.

The housing 1 forms a schematic exterior of the battery pack and may have a space in which the rechargeable battery 2 can be accommodated provided therein.

The housing 1 according to the present example embodiment may include a housing body 11 and a cover 12.

The housing body 11 may have the form of a box that is hollow and has one open side. A cross-sectional shape of the housing body 11 is not limited to the quadrangular shape illustrated in FIG. 1 and may be changed to various shapes such as, e.g., a polygonal shape, a circular shape, an elliptical shape, and the like.

The cover 12 may be coupled to the housing body 11 and may close the space inside the housing body 11. For example, the cover 12 may have a substantially plate-like form, and may be disposed to face the open side of the housing body 11. The cover 12 may be fixed to the housing body 11 using various types of coupling methods such as, e.g., bolting, welding, and fitting.

The rechargeable battery 2 may constitute a unit structure that stores and supplies power in the battery pack.

The rechargeable battery 2 may be provided as a plurality of rechargeable batteries 2. The plurality of rechargeable batteries 2 may be disposed in various patterns, such as a lattice pattern and a zigzag or crisscross pattern, inside the housing 1. The plurality of rechargeable batteries 2 may be disposed parallel to each other. The number of rechargeable batteries 2 may vary according to the size, shape, and the like, of the housing 1. A detailed configuration of the rechargeable batteries is described below.

The plurality of rechargeable batteries 2 may be electrically connected by a busbar (not illustrated). The plurality of rechargeable batteries 2 may be connected in series or parallel by the busbar. For example, a busbar may connect rechargeable batteries 2 disposed in the same row inside the housing 1 in parallel to each other, and may connect rechargeable batteries 2 disposed in two adjacent rows in series to each other. The busbar may be formed of or include an electrically conductible material such as, e.g., copper, aluminum, or nickel.

A configuration of a rechargeable battery according to various example embodiments of the present disclosure is described below.

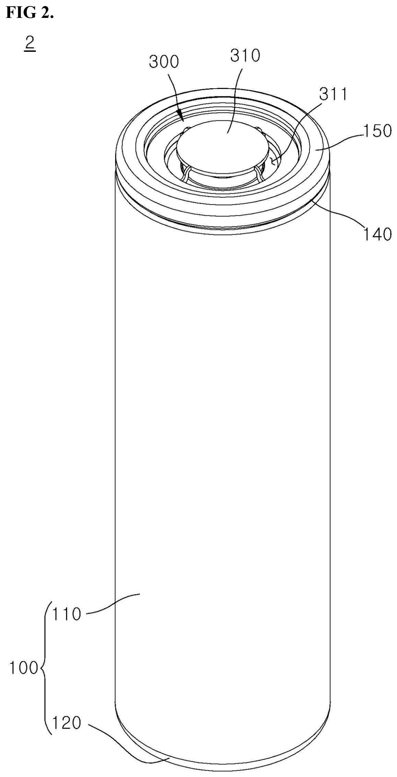

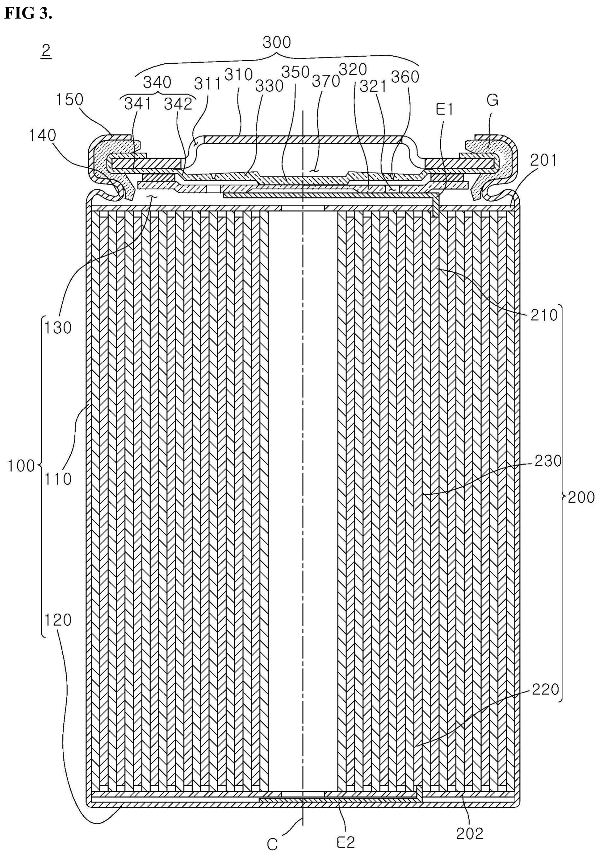

FIG. 2 is a perspective view schematically illustrating a configuration of a rechargeable battery, according to a first example embodiment of the present disclosure, and FIG. 3 is a cross-sectional view schematically illustrating the configuration of the rechargeable battery according to the first example embodiment of the present disclosure.

Referring to FIGS. 2 and 3, a rechargeable battery 2 according to the present example embodiment may include a case 100, an electrode assembly 200, a cap assembly 300, and an electrolyte (not illustrated).

An example in which the rechargeable battery 2 is a lithium ion rechargeable battery having a cylindrical shape is described below. However, the present disclosure is not limited thereto, and the rechargeable battery 2 may be or include a lithium polymer battery, a prismatic battery, or a pouch type battery.

The case 100 may form a schematic exterior of the rechargeable battery 2. The case 100 may be electrically conductible. For example, the case 100 may include at least one or more materials among steel, stainless steel, aluminum, and an aluminum alloy. Accordingly, the case 100 may protect the electrode assembly 200 from external impact and may perform a heat dissipation function by releasing the heat involved in a charge-discharge operation of the electrode assembly 200 to the outside of the rechargeable battery 2.

The case 100 according to the present example embodiment may include a sidewall portion 110 formed in a cylindrical shape and having a central axis C formed at a central portion. A central axis C of the case 100 described below may indicate the central axis of the sidewall portion 110. Both ends of the sidewall portion 110 that are perpendicular to the central axis C of the case 100 may be open.

The case 100 may further include a bottom portion 120 closing a lower end of the sidewall portion 110. The bottom portion 120 according to the present example embodiment may have a substantially disc-like shape and may face the lower end of the sidewall portion 110. The bottom portion 120 may be perpendicular to the central axis C of the case 100. A peripheral surface of the bottom portion 120 may be coupled to the lower end of the sidewall portion 110. The bottom portion 120 may be integrally formed with the sidewall portion 110 by, e.g., a drawing process or the like, or unlike this, the bottom portion 120 may be manufactured separately from the sidewall portion 110 and then coupled to the sidewall portion 110 by welding or the like.

The case 100 may further include an open portion 130 opening an upper end of the sidewall portion 110. The open portion 130 may constitute a configuration that provides a path through which an electrode assembly 200, which is described below, is inserted into the case 100 or provides a space in which a cap assembly 300, which is described below, is able to be installed in an upper end region of the case 100. The open portion 130 according to the present example embodiment may indicate an empty space surrounded by an upper end region of the sidewall portion 110 that is located at the opposite side of the bottom portion 120.

The electrode assembly 200 may constitute a unit structure that performs power charging and discharging operations in the rechargeable battery 2. The electrode assembly 200 may include a first electrode plate 210, a second electrode plate 220, and a separator 230 disposed between the first electrode plate 210 and the second electrode plate 220.

The electrode assembly 200 may be disposed inside the case 100. The electrode assembly 200 may be inserted into the case 100 through the open portion 130 of the case 100.

The electrode assembly 200 may be wound about a winding axis. For example, the electrode assembly 200 may have a form in which the first electrode plate 210, the separator 230, and the second electrode plate 220, which are stacked together, are wound clockwise or counterclockwise about a winding axis. Accordingly, the electrode assembly 200 may have a substantially jelly-roll-like form. A cross-sectional shape of the electrode assembly 200 is not limited to a circular shape, and may have various shapes such as, e.g., an elliptical shape and a polygonal shape. Herein, the winding axis may indicate a straight line passing through a central portion of the electrode assembly 200. The winding axis of the electrode assembly 200 may be disposed to be coaxial with the central axis C of the case 100.

The first electrode plate 210 may constitute a positive electrode of the electrode assembly 200. The first electrode plate 210 may have the form of foil including a metal material such as aluminum or an aluminum alloy. The type, size, shape, and the like of the first electrode plate 210 are not particularly limited as long as the first electrode plate 210 does not cause adverse chemical changes to the rechargeable battery, and has conductivity.

A first active material layer may be applied on at least a portion of the first electrode plate 210. The first active material layer may be applied on both surfaces of the first electrode plate 210, or may be applied on only one surface of the first electrode plate 210.

As the first electrode plate 210 constitutes a positive electrode, the first active material layer may include a positive electrode active material.

The positive electrode active material may be or include a compound capable of reversible intercalation and deintercalation of lithium (a lithiated intercalation compound). For example, one or more composite oxides of lithium and a metal such as or including at least one of cobalt, manganese, nickel, iron, and combinations thereof may be used.

For example, the positive electrode active material may include at least any one of lithium iron phosphate (LiFePO₄, LFP), lithium manganese iron phosphate (LiMnFePO₄, LMFP), and lithium nickel cobalt manganese (LiNiₓCo_{y}Mn_{z}O₂, LNCM). Herein, 0<x<1, 0<y<1, 0<z<1, and x+y+z=1 may be satisfied. The positive electrode active material may include only any one of lithium iron phosphate (LiFePO₄, LFP), lithium manganese iron phosphate (LiMnFePO₄, LMFP), and lithium nickel cobalt manganese (LiNiₓCo_{y}Mn_{z}O₂, LNCM) or may include any two or all of lithium iron phosphate (LiFePO₄, LFP), lithium manganese iron phosphate (LiMnFePO₄, LMFP), and lithium nickel cobalt manganese (LiNiₓCo_{y}Mn_{z}O₂, LNCM).

The first active material layer may further include a positive electrode conductive additive.

The positive electrode conductive additive may impart conductivity to the first active material layer, and any electrically conductive material that does not cause adverse chemical changes may be used as the positive electrode conductive additive. Examples of the positive electrode conductive additive may include carbon-based materials such as at least one of natural graphite, artificial graphite, carbon black, acetylene black, ketjen black, carbon fibers, carbon nanofibers, and carbon nanotubes, metal-based materials in the form of a metal powder or metal fibers and containing at least one of copper, nickel, aluminum, silver, and the like, conductive polymers such as polyphenylene derivatives, or a mixture thereof.

The first active material layer may further include a positive electrode binder.

The positive electrode binder ensures that particles constituting the positive electrode active material adhere to each other, and the positive electrode active material adheres to the first electrode plate 210.

As the positive electrode binder, at least one of a nonaqueous binder, an aqueous binder, a dry binder, or a combination thereof may be used.

Examples of the nonaqueous binder may include at least one of polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of styrene-butadiene rubber, (meth)acrylated styrene-butadiene rubber, (meth)acrylonitrile-butadiene rubber, (meth)acryl rubber, butyl rubber, fluorinated rubber, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, polyester resin, (meth)acryl resin, phenol resin, epoxy resin, polyvinyl alcohol, and a combination thereof.

When the aqueous binder is used as the positive electrode binder, a cellulose-based compound that can impart viscosity may be further included. As the cellulose-based compound, at least one of carboxymethyl cellulose, hydroxypropyl methyl cellulose, methyl cellulose, alkali metal salts thereof, or a mixture of one or more thereof may be used. At least one of Na, K, or Li may be used as the alkali metal.

The dry binder is a polymer material that can be formed into fibers and may be or include, for example, at least one of polytetrafluoroethylene, polyvinylidene fluoride, a polyvinylidene fluoride-hexafluoropropylene copolymer, polyethylene oxide, or a combination thereof.

The first electrode plate 210 may be electrically connected to the cap assembly 300 which is described below. As the first electrode plate 210 constitutes the positive electrode of the electrode assembly 200, the cap assembly 300 may constitute a positive electrode terminal of the rechargeable battery 2. For example, the first electrode plate 210 may be electrically connected to the cap assembly 300 by a first electrode tab E1. The first electrode tab E1 according to the present example embodiment may include a conductive metal material such as at least one of copper, a copper alloy, nickel, or a nickel alloy. The first electrode tab E1 may be disposed on an upper side of the electrode assembly 200, and may have both ends connected to the first electrode plate 210 and the cap assembly 300. One end of the first electrode tab E1 may be directly connected to the first electrode plate 210, or may be indirectly connected to the first electrode plate 210 via a separate current collector (not illustrated) connected to the first electrode plate 210.

However, the first electrode plate 210 is not limited to the above matters, and may be directly connected to the cap assembly 300 without the first electrode tab E1.

The second electrode plate 220 may constitute a negative electrode of the electrode assembly 200. The second electrode plate 220 may be a foil including a metal material such at least one of as copper, a copper alloy, nickel, or a nickel alloy. The second electrode plate 220 may be spaced a predetermined or desired distance from the first electrode plate 210, and face the first electrode plate 210.

The type, size, shape, and the like of the second electrode plate 220 are not particularly limited, as long as the second electrode plate 220 does not cause chemical changes to the rechargeable battery and has conductivity.

A second active material layer may be applied on at least a portion of the second electrode plate 220. The second active material layer may be applied on both surfaces of the second electrode plate 220, or may be applied on only one surface of the second electrode plate 220.

As the second electrode plate 220 constitutes a negative electrode, the second active material layer may include a negative electrode active material.

The negative electrode active material may include at least one of a material capable of reversible intercalation/deintercalation of lithium ions, lithium metal, a lithium metal alloy, a material capable of doping and dedoping lithium, or a transition metal oxide.

The material capable of reversible intercalation/deintercalation of lithium ions is a carbon-based negative electrode active material, and may include, for example, crystalline carbon, amorphous carbon, or a combination thereof. Examples of the crystalline carbon may include graphite such as natural graphite or artificial graphite that is irregularly shaped, plate-shaped, flake-shaped, spherical, or fibrous, and examples of the amorphous carbon may include at least one of soft carbon, hard carbon, mesophase pitch carbide, and calcinated coke.

An alloy of the lithium metal may include lithium metal and a metal such as or including at least one of Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be the material capable of doping and dedoping lithium. The Si-based negative electrode active material may be or include at least one of silicon, a silicon-carbon composite, SiOₓ (x=1 or 2), a Si-Q alloy (where Q is or includes at least one of alkali metals, alkali earth metals, Group 13 elements, Group 14 elements (excluding Si), Group 15 elements, Group 16 elements, transition metals, rare earth elements, and combinations thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to one example embodiment, the silicon-carbon composite may include a silicon particle and amorphous carbon coated on a surface of the silicon particle. For example, the silicon-carbon composite may include a secondary particle (core) in which silicon primary particles are assembled, and an amorphous carbon coating layer (shell) located on a surface of the secondary particle. The amorphous carbon may also be located between the silicon primary particles. For example, the silicon primary particles may be coated with amorphous carbon. The secondary particle may be dispersed in an amorphous carbon matrix.

The silicon-carbon composite may further include crystalline carbon. For example, the silicon-carbon composite may include a core including crystalline carbon and a silicon particle, and an amorphous carbon coating layer located on a surface of the core.

The Si-based negative electrode active material or Sn-based negative electrode active material may be mixed with a carbon-based negative electrode active material.

The second active material layer may further include a negative electrode conductive additive and a negative electrode binder.

The negative electrode conductive additive may impart conductivity to the second active material layer, and any electrically conductive material that does not cause adverse chemical changes may be used as the negative electrode conductive additive. Examples of the negative electrode conductive additive may include carbon-based materials such as at least one of natural graphite, artificial graphite, carbon black, acetylene black, ketjen black, carbon fibers, carbon nanofibers, and carbon nanotubes, metal-based materials in the form of a metal powder or metal fibers and containing at least one of copper, nickel, aluminum, silver, and the like, conductive polymers such as polyphenylene derivatives, or a mixture thereof.

The negative electrode binder ensures that particles constituting the negative electrode active material adhere to each other, and the negative electrode active material adheres to the second electrode plate 220.

As the negative electrode binder, a nonaqueous binder, an aqueous binder, a dry binder, or a combination thereof may be used. Examples of the nonaqueous binder may include at least one of polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of styrene-butadiene rubber, (meth)acrylated styrene-butadiene rubber, (meth)acrylonitrile-butadiene rubber, (meth)acryl rubber, butyl rubber, fluorinated rubber, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, polyester resin, (meth)acryl resin, phenol resin, epoxy resin, polyvinyl alcohol, and a combination thereof. When the aqueous binder is used as the negative electrode binder, a cellulose-based compound that can impart viscosity may be further included. As the cellulose-based compound, at least one of carboxymethyl cellulose, hydroxypropyl methyl cellulose, methyl cellulose, alkali metal salts thereof, or a mixture of one or more thereof may be used. At least one of Na, K, or Li may be used as the alkali metal.

The dry binder is a polymer material that can be formed into fibers and may be or include, for example, at least one of polytetrafluoroethylene, polyvinylidene fluoride, a polyvinylidene fluoride-hexafluoropropylene copolymer, polyethylene oxide, or a combination thereof.

The second electrode plate 220 may be electrically connected to the case 100. For example, the second electrode plate 220 may be electrically connected to the case 100 by a second electrode tab E2. As the second electrode plate 220 constitutes the negative electrode of the electrode assembly 200, the case 100 may constitute a negative electrode terminal of the rechargeable battery 2. The second electrode tab E2 according to the present example embodiment may include a conductive metal material such as at least one of copper, a copper alloy, nickel, or a nickel alloy. The second electrode tab E2 may be disposed on a lower side of the electrode assembly 200, and may have both ends connected to the second electrode plate 220 and the bottom portion 120 of the case 100. One end of the second electrode tab E2 may be directly connected to the second electrode plate 220 or may be indirectly connected to the second electrode plate 220 via a separate current collector (not illustrated) connected to the second electrode plate 220.

However, the second electrode plate 220 is not limited to the above matters and may be directly connected to the case 100 without the second electrode tab E2.

The separator 230 may be disposed between the first electrode plate 210 and the second electrode plate 220. The separator 230 may perform a function of reducing or preventing a short circuit of the first electrode plate 210 and the second electrode plate 220 while allowing movement of lithium ions between the first electrode plate 210 and the second electrode plate 220.

The separator 230 may be provided as a pair of separators 230. The pair of separators 230 may be disposed to face both surfaces of the first electrode plate 210 or the second electrode plate 220. The pair of separators 230 may be wound about the winding axis together with the first electrode plate 210 and the second electrode plate 220.

The separator 230 is described in more detail below.

A first insulation plate 201 and a second insulation plate 202 may be disposed on both sides of the electrode assembly 200. The first insulation plate 201 and the second insulation plate 202 may include an insulation material such as at least one of rubber, polyethylene (PE), polypropylene (PP), and polyethylene terephthalate (PET).

The first insulation plate 201 according to the present example embodiment may have a substantially disc-like form. The first insulation plate 201 may be disposed between an upper surface of the electrode assembly 200 and the cap assembly 300. Accordingly, the first insulation plate 201 may hinder or block the upper surface of the electrode assembly 200 from coming into direct contact with the cap assembly 300 and may insulate the electrode assembly 200 and the cap assembly 300 from each other. A through-hole (not illustrated) through which the first electrode tab E1 can pass may be formed in the first insulation plate 201.

The second insulation plate 202 according to the present example embodiment may have a substantially disc-like form. The second insulation plate 202 may be disposed between a lower surface of the electrode assembly 200 and the bottom portion 120 of the case 100. Accordingly, the second insulation plate 202 may hinder or block the lower surface of the electrode assembly 200 from coming into direct contact with the bottom portion 120 of the case 100, and may insulate the electrode assembly 200 and the bottom portion 120 of the case 100 from each other. A through-hole (not illustrated) through which the second electrode tab E2 can pass may be formed in the second insulation plate 202.

The cap assembly 300 may be coupled to the case 100 and may seal the open portion 130 of the case 100. For example, the cap assembly 300 may be disposed on the upper end of the sidewall portion 110, that is, on the open portion 130. A beading part 140 concave toward the central axis C of the case 100 may be formed on the sidewall portion 110. The beading part 140 may be disposed on a lower side of the cap assembly 300, and may limit the cap assembly 300 from being inserted a predetermined or desired distance or more into the case 100. A crimping part 150 where the upper end of the sidewall portion 110 is bent toward the central axis C of the case 100 may be formed on an upper side of the beading part 140. The crimping part 150 may be disposed on an upper side of the cap assembly 300 and may reduce or prevent the cap assembly 300 from being detached from the case 100. A gasket G may be disposed between the case 100 and the cap assembly 300. The gasket G may constitute a configuration that fixes the position of the cap assembly 300 to the open portion 130 by its own elastic restoration force, electrically insulates the case 100 and the cap assembly 300 from each other, and hinders or blocks inflow or outflow of moisture or an electrolyte between the case 100 and the cap assembly 300.

The cap assembly 300 may include a cap up 310, a cap down 320, a vent plate 330, an extension 340, and a contact portion 350.

The cap up 310 forms an upper outer appearance of the cap assembly 300, and may be placed in the opening 130. The cap up 310 may be electrically connected to the first electrode plate 210 by the cap down 320 and the vent plate 330 described below.

The cap down 320 may be placed facing the cap up 310 and may be electrically connected to the electrode assembly 200. A cap down hole 321 may be formed in the cap down 320 that penetrates the cap down 320 upwardly and downwardly.

The vent plate 330 may be arranged between the cap up 310 and the cap down 320.

The extension 340 may be extended from the vent plate 330 and connected to the cap up 310. The extension 340 may have a configuration that supports the vent plate 330 with respect to the cap up 310, and provides an electrical connection between the cap up 310 and the vent plate 330.

The extension 340 according to the present example embodiment may include a support 341 and a hinge 342.

The support 341 forms one outer surface of the extension 340, and may be connected to the cap up 310.

The hinge 342 forms the other outer surface of the extension 340, and may be arranged between the support 341 and the vent plate 330. The hinge portion 342 may function as a configuration that interconnects the support portion 341 and the vent plate 330 and guides deformation of the vent plate 330 when the internal pressure of the case 100 increases.

The contact portion 350 may protrude from the vent plate 330 toward the cap down 320, and may come into contact with the cap down 320.

The rechargeable battery 2 according to the present example embodiment may further include a notch 360.

The rechargeable battery 2 according to the present example embodiment may further include a recess 370.

The recess 370 may be formed concavely from the vent plate (330) toward the contact portion 350. The recess 370 can function as a configuration that reduces the thickness of the central region of the vent plate 330 which thickness is relatively increased by the contact portion 350, thereby inducing smooth deformation of the vent plate 330 when the internal pressure of the case 100 increases.

The gasket G according to the present example embodiment may include an insulation material such as at least one of rubber, polyethylene (PE), polypropylene (PP), and polyethylene terephthalate (PET). The gasket G may have a substantially ring-like form and may be disposed on an inner side of the beading part 140 and/or the crimping part 150. An outer side surface of the gasket G may come into close contact with an inner side surface of the beading part 140 and/or the crimping part 150, and an inner side surface of the gasket G may come into close contact with an outer side surface of the cap assembly 300.

The gasket G may be disposed on the inner side of the beading part 140 and/or the crimping part 150. The gasket G may be electrically connected to the first electrode plate 210 by the first electrode tab E1. As the first electrode plate 210 constitutes the positive electrode of the electrode assembly 200, the cap assembly 300 may constitute the positive electrode terminal of the rechargeable battery.

When a pressure inside the case 100 increases due to overcurrent or the like, the cap assembly 300 may hinder or block electrical connection between the rechargeable battery 2 and an external device. When the pressure inside the case 100 increases to a predetermined or desired size or more, the cap assembly 300 may break and allow the space inside the case 100 to communicate with the space outside the case 100. Accordingly, the cap assembly 300 may reduce a risk of explosion of the rechargeable battery 2 when overcurrent occurs.

The separator 230 and the electrolyte are described in detail below.

A rechargeable lithium battery 2 may have improved collision characteristics by including the separator 230 and the electrolyte in the electrode assembly. Herein, "improved collision characteristics" may mean that a pass rate is 90% or more at the time of evaluation of collision characteristics which is described below. The improved collision characteristics may improve reliability of the rechargeable lithium battery when the rechargeable lithium battery is exposed to an external physical impact.

Collision characteristics may be improved by reducing or preventing any tearing of the separator when the rechargeable lithium battery receives an external impact. Alternatively, collision characteristics may be improved by decreasing a heating value by increasing a short-circuit area in response to excessively large tearing of the separator and thus reducing or preventing current concentration in case the short-circuit area is locally narrow when the rechargeable lithium battery receives an external impact.

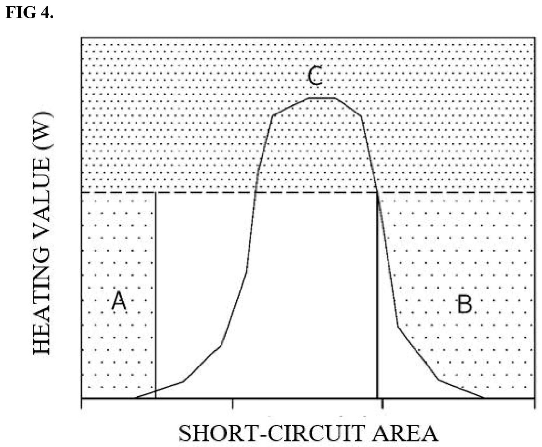

In this regard, the above-described behavior of the separator is described with reference to FIG. 4.

FIG. 4 describes a relationship between a short-circuit area (X-axis) and a heating value (Y-axis) at the time of evaluation of collision characteristics of a separator.

Referring to FIG. 4, when a rechargeable lithium battery or a separator of the rechargeable lithium battery receives an external impact, tearing of the separator may not occur at all, or tearing of the separator may occur and cause a short circuit.

In FIG. 4, region A shows a case in which collision characteristics are fine or acceptable due to tearing of the separator not occurring at all.

In FIG. 4, region B shows a case in which collision characteristics are fine or acceptable due to a low heating value resulting from considerable tearing of the separator or the separator being readily torn, causing a pole plate to come into contact with an electrolyte or the like over a large area, a short-circuit area to be large, and the current to no longer be concentrated.

On the other hand, region C in FIG. 4 shows a case in which collision characteristics are defective or unacceptable due to a significantly high heating value resulting from, despite tearing of the separator, a short-circuit area being insufficient, and current being relatively concentrated compared to region B in FIG. 4.

The separator according to one example embodiment improves collision characteristics by the behavior according to region B in FIG. 4 described above. That is, the separator for a rechargeable lithium battery according to one example embodiment can improve collision characteristics by considerable tearing of the separator or the separator being readily torn.

The rechargeable lithium battery can provide improved collision characteristics by including the separator 230 and the electrolyte.

The separator 230 includes a base and a coating layer located on at least one surface of the base, a sum of machine direction (MD) and transverse direction (TD) elongation rates of the base is about 200% or less, a sum of MD and TD tensile strengths of the base is about 4,000 kgf/cm² or less, the coating layer includes a binder, and the binder includes one or more of an aramid-based resin and an acrylic resin

The electrolyte includes about 20 vol% or more of ethyl propionate or ethylene carbonate.

### Base of separator

Collision characteristics may be improved by the sum of the MD elongation rate and TD elongation rate of the base, and the sum of the MD tensile strength and TD tensile strength of the base satisfying the above ranges.

When the sum of the tensile strengths of the base is about 4,000 kgf/cm² or less, since it becomes possible for the separator to break at the time of deformation of the rechargeable lithium battery, and a short-circuit area can be increased, the occurrence of explosions and ignitions can be lowered, and it may be possible to provide improved collision characteristics.

When the sum of the elongation rates of the base is about 200% or less, since it becomes possible for the separator to break at the time of deformation of the rechargeable lithium battery, and a short-circuit area can be increased, the occurrence of explosions and ignitions can be lowered, and it may be possible to provide improved collision characteristics.

When the sum of the tensile strengths of the base being about 4,000 kgf/cm² or less and the sum of the elongation rates of the base being about 200% or less are both satisfied, an effect of improving collision characteristics may be significantly greater compared to when only one of the above conditions is satisfied.

In particular, when the sum of the tensile strengths of the base being about 4,000 kgf/cm² or less and the sum of the elongation rates of the base being about 200% or less are both satisfied, it may be possible to improve collision characteristics of a rechargeable battery including a coating layer and an electrolyte which is described below.

In one example embodiment, the sum of the tensile strengths of the base may range from about 2,000 kgf/cm² to about 4,000 kgf/cm², for example, 2,000, 2,100, 2,200, 2,300, 2,400, 2,500, 2,600, 2,700, 2,800, 2,900, 3,000, 3,100, 3,200, 3,300, 3,400, 3,500, 3,600, 3,700, 3,800, 3,900, 4,000kgf/cm², from 2,500 kgf/cm² to 4,000 kgf/cm² or from 3,300 kgf/cm² to 4,000 kgf/cm².

In one example embodiment, the MD tensile strength of the base may be higher than the TD tensile strength. In this case, the above-mentioned sum of tensile strengths and sum of elongation rates may be readily reached.

For example, the MD tensile strength may range from about 1,500 kgf/cm² to about 3,000 kgf/cm², for example, 1,500, 1,600, 1,700, 1,800, 1,900, 2,000, 2,100, 2,200, 2,300, 2,400, 2,500, 2,600, 2,700, 2,800, 2,900, 3,000 kgf/cm², from 2,000 kgf/cm² to 3,000 kgf/cm², for example, from 1,800 kgf/cm² to 2,500 kgf/cm², from 1,900 kgf/cm² to 2,500 kgf/cm², or from 2,000 kgf/cm² to 2,500 kgf/cm². The TD tensile strength may range from about 500 kgf/cm² to about 2,000 kgf/cm², for example, 500, 600, 700, 800, 900, 1,000, 1,100, 1,200, 1,300, 1,400, 1,500, 1,600, 1,700, 1,800, 1,900, 2,000 kgf/cm², from 1,000 kgf/cm² to 2,000 kgf/cm².

In one example embodiment, the sum of the elongation rates of the base may range from about 50% to about 200%, for example, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200%,from 80% to 180% or from 80 to 160%.

In one example embodiment, the TD elongation rate of the base may be higher than the MD elongation rate. In this case, the above-mentioned sum of tensile strengths and sum of elongation rates may be readily reached.

For example, the MD elongation rate may range from about 5% to about 100%, for example, 5, 15, 20, 25, 30, 35, 40, 45, 50, 55, 60, 65, 70, 75, 80, 85, 90, 95, 100%, from 10% to 80% or from 10% to 70%. The TD elongation rate may range from about 20% to about 180%, for example, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180%, from 20% to 150%, from 20% to 100%, from 50% to 120%, or from 50% to 100%.

Herein, the tensile strength and the elongation rate may be measured using a method described below.

Herein, "MD" may be a machine direction of the base. The machine direction of the base may be a direction in which, when the base is a resin film, the resin is prepared as a non-elongated film when prepared using a melting extrusion method or a solution casting method. In addition, "TD" is a direction orthogonal to the MD when the film is viewed from the top.

The base may be porous. Accordingly, air permeability of the separator may be increased, and movement of lithium ions may be increased.

The base may be or include a polymer membrane formed of or including any one polymer such as or including at least one of a polyolefin such as polyethylene or polypropylene, a polyester such as polyethylene terephthalate or polybutylene terephthalate, polyacetal, polyamide, polyimide, polycarbonate, polyether ether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon^{®}, and polytetrafluoroethylene, or a copolymer or mixture of two or more thereof.

In one example embodiment, the base may be or include a polyolefin-based base including a polyolefin, and for example, may be or include a polyethylene base.

The polyolefin-based base has an desired or improved shut-down function and may contribute to improving battery safety. For example, the polyolefin-based base may be or include at least one of a polyethylene single membrane, a polypropylene single membrane, a polyethylene/polypropylene double membrane, a polypropylene/polyethylene/polypropylene triple membrane, and a polyethylene/polypropylene/polyethylene triple membrane. In addition, the polyolefin-based resin may include a non-olefin resin in addition to an olefin resin, or may include a copolymer of an olefin and a non-olefin monomer.

The base satisfying the sum of elongation rates and the sum of tensile strengths may be implemented by, when preparing the base, adjusting a weight-average molecular weight, a melting temperature (Tm), an elongation temperature, and/or an elongation ratio of a resin used in the base, for example, a polyolefin-based resin.

In one example embodiment, the weight-average molecular weight of the polyolefin-based resin may be about 600,000 g/mol or more, for example, may range from about 600,000 g/mol to about 4,000,000 g/mol or from 600,000 g/mol to 3,000,000 g/mol. Within the above range, the above-mentioned sum of tensile strengths and sum of elongation rates may be readily reached. Herein, the weight-average molecular weight may be obtained as a value calibrated with polystyrene using gel permeation chromatography.

In one example embodiment, the melting temperature (Tm) of the polyolefin-based resin may range from about 130 °C to about 140 °C. Within the above range, the above-mentioned sum of tensile strengths and sum of elongation rates may be readily reached. Herein, Tm may be obtained from a product catalog of the polyolefin-based base, or using a method known to those skilled in the art. For example, the melting temperature may be measured using the following method.

Using a differential scanning calorimeter (DSC, device name: DSC Q20, manufacturer: TA Instruments), a temperature was increased at 10 °C/min to heat a polyethylene composition to 200 °C (Cycle 1), a temperature was lowered at 10 °C/min from 200 °C to 40 °C after 1 minute of isothermal conditions, and then a temperature was increased again at 10 °C/min from 40 °C to 200 °C after 1 minute of isothermal conditions (Cycle 2). In a DSC curve thus obtained, a temperature of the maximum point of the endothermic peak was measured as a melting temperature (Tm, °C), and a temperature of the maximum point of the exothermic peak was measured as a crystallization temperature (Tc, °C). The melting temperature (Tm) and the crystallization temperature (Tc) are results of measuring each of Tm and Tc in the section where the second temperatures increase and decrease (Cycle 2).

The base may be prepared by elongating the non-elongated film including the resin using a wet process. For example, the base may be prepared using a filler extraction method, but is not limited thereto. In the filler extraction method, a polyolefin-based resin and a filler are mixed and rolled, the filler is extracted, processed, and formed, and then a porous base is prepared by a subsequent elongation process.

In one example embodiment, the elongation temperature may range from about 90 °C to about 130 °C, for example, from 90 °C to 110 °C. Within the above range, the above-mentioned sum of tensile strengths and sum of elongation rates may be readily reached.

In one example embodiment, the elongation ratio may range from about 4 to about 10, for example, from 5 to 8. Within the above range, the above-mentioned sum of tensile strengths and sum of elongation rates may be readily reached.

In one example embodiment, the elongation may be performed by single-axis MD or TD elongation of the non-elongation film, or two-axis MD and TD elongations thereof.

The base may have a thickness of about 10 µm or less, for example, a thickness ranging from about 1 µm to about 10 µm or from 1 µm to 8 µm.

### Coating layer of separator:

The coating layer includes a binder, and the binder includes one or more of an aramid-based resin and an acrylic resin.

One or more of the aramid-based resin and the acrylic resin may make it possible to improve collision characteristics of a rechargeable lithium battery including a separator including the base described above.

In one example embodiment, one or more of the aramid-based resin and the acrylic resin may be included at about 95 wt% or more, for example, in a range of 95 wt% to 100 wt%, in the binder.

In one example embodiment, the aramid-based resin or the acrylic resin may be included at about 95 wt% or more, for example, in a range of 95 wt% to 100 wt%, in the binder.

In one example embodiment, the coating layer may include the binder at about 95 wt% or more, for example, in a range of 95 wt% to 100 wt%.

The aramid-based resin may allow adhesive strength of the separator to the first electrode plate or the second electrode plate, which is described below, to be readily reached, thereby reducing the occurrence of short circuits and improving collision characteristics.

In one example embodiment, the aramid-based resin may include one or more units of Chemical Formula 1 and Chemical Formula 2 below:

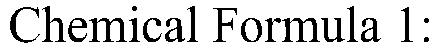

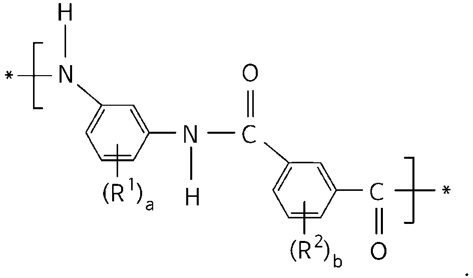

In Chemical Formula 1 above, R¹ and R² may be or include, each independently, a substituted or unsubstituted C1 to C10 alkyl group, a substituted or unsubstituted C6 to C10 aryl group, a substituted or unsubstituted C3 to C10 cycloalkyl group, a substituted or unsubstituted C7 to C10 arylalkyl group, a hydroxyl group, a halogen, a cyano group, or an amino group, and a and b are each independently an integer in a range from 0 to 4.

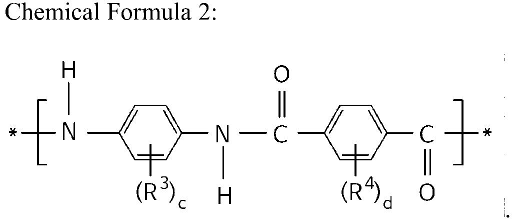

In Chemical Formula 2 above, R³ and R⁴ may be or include, each independently, a substituted or unsubstituted C1 to C10 alkyl group, a substituted or unsubstituted C6 to C10 aryl group, a substituted or unsubstituted C3 to C10 cycloalkyl group, a substituted or unsubstituted C7 to C10 arylalkyl group, a hydroxyl group, a halogen, a cyano group, or an amino group, and c and d are each independently, an integer in a range from 0 to 4.

In one example embodiment, the aramid-based resin may include a meta- or para-aramid-based resin.

The acrylic resin may include a copolymer of a monomer mixture including one or more acrylic monomers, for example, among an acrylic monomer containing a carboxylic acid group, an acrylic monomer containing a cyano group, an acrylic monomer containing a sulfonic acid group, and an acrylic monomer containing an alkyl group.

A specific type of each of the acrylic monomer containing a carboxylic acid group, the acrylic monomer containing a cyano group, the acrylic monomer containing a sulfonic acid group, and the acrylic monomer containing an alkyl group may be chosen with reference to common types known to those skilled in the art.

In one example embodiment, the acrylic resin may have a glass transition temperature ranging from about 70 °C to about 100 °C, for example, from 70 °C to 90 °C. Within the above range, an adhesive strength of the separator to the first electrode plate or the second electrode plate, which is described below, may be readily reached, thereby reducing the occurrence of short circuits and improving collision characteristics.

The separator may undergo a preprocessing process simulating a chemical process for the first electrode plate or the second electrode plate, and an adhesive strength of the separator measured by cell decomposition at room temperature may be about 0.5 gf/mm or more. Within the above range, it may be possible to provide improved collision characteristics by helping breakage of an electrode plate and a separator, and increasing a short-circuit area even when the outer shape of a battery is deformed due to external collision. When the adhesive strength is less than 0.5 gf/mm, at the time of external collision, the separator and the electrode plate may be readily separated, the separator may not readily break, and a sufficient short-circuit area may not be secured.

An adhesive strength measurement method used herein is described in more detail in evaluation methods of examples and comparative examples below.

In one example embodiment, the adhesive strength may range from about 0.5 gf/mm to about 1.0 gf/mm.

The coating layer may further include one or more of a filler and polyethylene-based wax in addition to the binder.

In one example embodiment, the coating layer may be or include an adhesive layer including one or more of the aramid-based resin and the acrylic resin.

In another example embodiment, the coating layer may include a heat-resistant layer including the filler and the binder; and an adhesive layer located on the heat-resistant layer and including one or more of the aramid-based resin and the acrylic resin.

The binder included in the heat-resistant layer may include an acrylic binder. As the acrylic binder, a common type known to those skilled in the art may be used.

The filler may include one or more of an organic filler and an inorganic filler.

In one example embodiment, the organic filler may include a crosslinked polymer filler. The crosslinked polymer filler may decrease moisture content, further decrease a heat shrinkage rate of the separator, and improve insulation. The crosslinked polymer filler may be included in a combination of the (meth)acrylic binder and the inorganic filler, and may make it possible to decrease the heat shrinkage rate of the separator.

The inorganic filler may be or include a ceramic material. For example, the inorganic filler may include at least one of a metal oxide, a metalloid oxide, a metal fluoride, a metal hydroxide, or a combination thereof. For example, the inorganic filler may include at least one of alumina (e.g., Al₂O₃), SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto.

The filler may have an average particle diameter D50 ranging from about 20 nm to about 200 nm, for example, from 20 nm to 150 nm ,or from 50 nm to 100 nm.

The filler may have a plate shape, a spherical shape, a cubic shape, or a combination thereof. For example, the filler may have a spherical shape.

The filler may be included in a range of from about 50 wt% to about 99 wt%, for example, 70 wt% to 99 wt%, for example, 75 wt% to 99 wt%, for example, 80 wt% to 99 wt%, for example, 85 wt% to 99 wt%, for example, 90 wt% to 99 wt%, for example, 95 wt% to 99 wt%, in the coating layer. When the filler is included within the above range, desired or improved heat resistance, durability, oxidation resistance, and stability may be exhibited.

In one example embodiment, in the heat-resistant layer, the binder and the filler may be included at a mass ratio in a range of from about 1:10 to about 1:50, for example, at a mass ratio of 1:20 to 1:30. Within the above range, it may be possible to implement the effects of the separator described above, and there may be effects of improving heat resistance and durability.

The polyethylene-based wax may decrease a shut-down temperature of the separator and may improve battery safety.

In the coating layer, a thickness of each of the heat-resistant layer and the adhesive layer may be about 10 µm or less, and may range from about 0.1 µm to about 10 µm, from 0.1 µm to 5 µm, or from 0.5 µm to 2 µm.

The separator may be prepared by applying a composition for the coating layer on at least one surface of the base and drying the composition. For example, undergoing a pressing process at a predetermined or desired pressure after the drying may be preferable because the adhesive strength is further increased.

The electrolyte includes about 20 vol% or more of ethyl propionate (EP) or ethylene carbonate (EC).

The electrolyte may make it possible to secure the adhesive strength of the separator to the first electrode plate or the second electrode plate.

In one example embodiment, the electrolyte may include about 20 vol% or more of ethyl propionate (EP). For example, the electrolyte may include about 20 vol% to about 80 vol% of ethyl propionate (EP).

The electrolyte may further include one or more of ethylene carbonate (EC), propylene carbonate (PC), and propyl propionate (PP). For example, the electrolyte may include about 10 vol% to about 30 vol% of ethylene carbonate (EC); about 10 vol% to about 30 vol% of propylene carbonate (PC); about 20 vol% to about 40 vol% of ethyl propionate (EP); and about 30 vol% to about 60 vol% of propyl propionate (PP).

In one example embodiment, the electrolyte may include about 20 vol% or more of ethylene carbonate (EC). For example, the electrolyte may include about 20 vol% to about 80 vol% of ethylene carbonate.

The electrolyte may further include one or more of ethyl propionate (EP), ethyl methyl carbonate (EMC), and dimethyl carbonate (DMC). For example, the electrolyte may include about 20 vol% to about 30 vol% of ethylene carbonate (EC); about 10 vol% to about 40 vol% of ethyl methyl carbonate (EMC); and about 30 vol% to about 70 vol% of dimethyl carbonate (DMC).

The electrolyte may further include a lithium salt.

The lithium salt dissolves in an organic solvent, and constitutes a supply source of lithium ions in a battery to enable the operation of a rechargeable lithium battery and accelerate the movement of lithium ions between a positive electrode and a negative electrode. Representative examples of the lithium salt may include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂) (x and y are integers in a range from 1 to 20), lithium trifluoromethanesulfonate, lithium tetrafluoroethanesulfonate, lithium difluoro bis(oxalato) phosphate (LiDFBOP), lithium bis(oxalato)borate (LiBOB), or two or more thereof.

Examples and comparative examples of the present disclosure are described below. However, the following examples are only example embodiments of the present disclosure, and the present disclosure is not limited to the examples below.

Measurement of MD and TD tensile strengths and MD and TD elongation rates of base:

### MD tensile strength (unit: kgf/cm²):

A base was cut into sizes of 10 cm in the MD and 1 cm in the TD to prepare samples, the samples were stretched 100 mm/min in the MD to measure tensile strength using tensile strength measurement equipment (3343, Instron), and an average value of five sheets of the base was set as a tensile strength.

### TD tensile strength (unit: kgf/cm²):

A base was cut into sizes of 1 cm in the MD and 5 cm in the TD to prepare samples, the samples were stretched 100 mm/min in the TD to measure tensile strength using tensile strength measurement equipment (3343, Instron), and an average value of five sheets of the base was set as a tensile strength.

### MD elongation rate:

A base was cut into sizes of 10 cm in the MD and 1 cm in the TD to prepare samples, the samples were pulled 100 mm/min in the MD at room temperature through Instron (3343) equipment, a length at which each sample was stretched until breaking was measured, a ratio of an initial length of each sample to the stretched length was calculated, and an average value of five sheets of the base was set as an elongation rate.

### TD elongation rate:

A base was cut into sizes of 1 cm in the MD and 5 cm in the TD to prepare samples, the samples were pulled 100 mm/min in the TD at room temperature through Instron (3343) equipment, a length at which each sample was stretched until breaking was measured, a ratio of an initial length of each sample to the stretched length was calculated, and an average value of five sheets of the base was set as an elongation rate.

### Example 1

### Preparation of separator

A dispersion was prepared by dispersing alumina (spherical, average particle diameter D50: 50 nm) and an acrylic binder in a polar solvent (NMP/DMAc, and the like), then milling the alumina and acrylic binder for 30 minutes at 25 °C using a bead mill, and dispersing the alumina and acrylic binder. A composition for a heat-resistant layer was prepared by adding water to the dispersion so that the total solid content became 20 wt%. A weight ratio of the acrylic binder to the alumina in the composition for a heat-resistant layer was 1:20.

A dispersion was prepared by dispersing an aramid-based resin in a polar solvent (NMP/DMAc, and the like), then milling the aramid-based resin for 30 minutes at 25 °C using a bead mill, and dispersing the aramid-based resin. A composition for an adhesive layer was prepared by adding water to the dispersion so that the total solid content became 20 wt%. The aramid-based resin was prepared by polymerizing paraphenylenediamine and terephthalic acid chloride.

A heat-resistant layer (thickness: 2 µm) was formed by coating one surface of a polyethylene film with the composition for a heat-resistant layer using a die coating method, and then drying the polyethylene film at 70 °C for 10 minutes.

A separator was prepared by forming an adhesive layer (thickness: 2 µm) by coating the heat-resistant layer with the composition for an adhesive layer using a die coating method, and then drying the heat-resistant layer at 70 °C for 10 minutes.

As a porous base, a polyethylene film (a polyethylene-based resin had a weight-average molecular weight of 3,000,000 g/mol and a Tm ranging from 132 to 136 °C, thickness: 8 µm, prepared by elongation) was used.

### Manufacture of negative electrode:

A negative electrode active material slurry was prepared by mixing 90.4 wt% graphite particles having an average particle diameter of 13 µm, 7.1 wt% silicon-carbon composite, 1.5 wt% styrene-butadiene rubber (SBR) binder, and 1.0 wt% carboxymethyl cellulose (CMC), and then adding distilled water and stirring for 60 minutes using a mechanical stirrer. The slurry was applied on a 10 µm-thick copper current collector, dried for 0.5 hours in a 100 °C hot air dryer, dried again for 4 hours under vacuum and 120 °C conditions, and roll-pressed to manufacture a negative electrode.

### Manufacture of positive electrode:

A positive electrode active material slurry was prepared by mixing 97.7 wt% lithium-cobalt-nickel-aluminum oxide (91 mol% nickel), 1.0 wt% carbon black powder as a conductive additive, and 1.3 wt% poly(vinylidene fluoride) (PVDF), adding the mixture to an N-methyl-2-pyrrolidone solvent, and then stirring the mixture for 30 minutes using a mechanical stirrer. The slurry was applied on a 15 µm-thick aluminum current collector, dried for 0.5 hours in a 100 °C hot air dryer, dried again for 4 hours under vacuum and 120 °C conditions, and roll-pressed to manufacture a positive electrode.

### Manufacture of battery:

The separator was placed between the positive electrode and the negative electrode, and a laminate of positive electrode-sample-negative electrode-sample was wound in a jelly roll form and put into a cylindrical case. 6 g of electrolyte (a mixed solvent of ethylene carbonate (EC), ethyl methyl carbonate (EMC), and dimethyl carbonate (DMC) having a volume ratio of 20:10:70 based on 100 parts by volume in which 1.5 M LiPF₆ was dissolved) was injected to completely impregnate the laminate with the electrolyte, and the laminate was sealed, charged and discharged, and then left at 25 °C for 12 hours and at 60 °C for 24 hours to manufacture a battery.

### Example 2

The polyethylene film of Example 1 was changed to a polyethylene film having tensile strengths and elongation rates of Table 1 below. The polyethylene film was prepared by increasing an elongation temperature compared to the polyethylene film of Example 1.

A dispersion was prepared by dispersing alumina (spherical, average particle diameter D50: 50 nm) and an acrylic binder in a polar solvent (NMP/DMAc, and the like), then milling the alumina and acrylic binder for 30 minutes at 25 °C using a bead mill, and dispersing the alumina and acrylic binder. A composition for a heat-resistant layer was prepared by adding water to the dispersion so that the total solid content became 20 wt%. A weight ratio of the acrylic binder to the alumina in the composition for a heat-resistant layer was 1:20.

A dispersion was prepared by dispersing an acrylic binder (glass transition temperature: 80 °C) in a polar solvent (NMP/DMAc, and the like), then milling the acrylic binder for 30 minutes at 25 °C using a bead mill, and dispersing the acrylic binder. A composition for an adhesive layer was prepared by adding water to the dispersion so that the total solid content became 20 wt%.

A heat-resistant layer (thickness: 2 µm) was formed by coating one surface of the polyethylene film with the composition for a heat-resistant layer using a die coating method and then drying the polyethylene film at 70 °C for 10 minutes.

A separator was prepared by forming an adhesive layer (thickness: 2 µm) by coating the heat-resistant layer with the composition for an adhesive layer using a die coating method and then drying the heat-resistant layer at 70 °C for 10 minutes.

### Example 3

A separator was prepared in the same manner as in Example 1, with a difference in changing the polyethylene film of Example 1 to a polyethylene film having tensile strengths and elongation rates of Table 1 below and changing the constitution of an electrolyte. The polyethylene film was prepared by increasing an elongation temperature compared to the polyethylene film of Example 1.

### Comparative Examples 1 to 6

A separator was prepared in the same manner as in Example 1, with a difference in changing elongation temperatures and elongation ratios of Examples 1 to 3 and using polyethylene films of Table 1 below in place of polyethylene films and/or not having an adhesive layer according to Table 1 below.

### Positive electrode adhesive strength (units: gf/mm, wet adhesive strength)

A separator was attached to a positive electrode (manufactured in the same manner as when manufacturing the battery), the separator and the positive electrode were inserted into a pouch, an electrolyte (the same as in the battery) was injected thereinto, the pouch was vacuum-sealed, and then a pressure of 300 kgf was applied thereto at a temperature of 75 °C for 1 hour. Then, the separator and the positive electrode were taken out of the pouch, the positive electrode and the separator were unfolded to 180°, and the force required to peel the positive electrode off of the separator was measured using a tension measuring device (HT400, Tinius Olsen Co., Ltd.).

### Collision evaluation (units: %)

Evaluation was performed using the UN collision evaluation method (a 9.1 kg heavy object was dropped from a certain height to check whether explosion and ignition occurred). A ratio of the number of times a sample passed the collision evaluation to the total number of evaluated samples was calculated.

**Table 1:**

| | Base | | | | | | Coating layer | | Electrolyte | Adhesive strength | Collision |
|---|---|---|---|---|---|---|---|---|---|---|---|
| | Tensile strength (unit: ??) | | | Elongation rate | | | | | | | |
| | MD | TD | Sum | MD | TD | Sum | Adhesive layer | Heat-resistant layer | | | |
| Example 1 | 2413 | 1038 | 3451 | 13 | 67 | 80 | Aramid | Inorganic particle +acrylic binder | EC/EMC/DMC -20/10/70 | ○ | 90 |
| Example 2 | 2146 | 1711 | 3857 | 66 | 91 | 157 | Acryl Tg 80 | Inorganic particle +acrylic binder | EC/EMC/DMC -20/10/70 | ○ | 100 |
| Example 3 | 1918 | 1675 | 3593 | 67 | 102 | 169 | Aramid | Inorganic particle +acrylic binder | EC/PC/EP/PP =10/15/30/45 | ○ | 90 |
| Comparative Example 1 | 1928 | 2015 | 3943 | 122 | 142 | 264 | - | Inorganic particle +acrylic binder | EC/EMC/DMC -20/10/70 | X | 30 |
| Comparative Example 2 | 2797 | 2499 | 5296 | 79 | 88 | 167 | - | Inorganic particle +acrylic binder | EC/EMC/DMC -20/10/70 | X | 50 |
| Comparative Example 3 | 1904 | 1897 | 3801 | 85 | 97 | 182 | - | Inorganic particle +acrylic binder | EC/EMC/DMC =10/10/80 | X | 40 |
| Comparative Example 4 | 2520 | 2127 | 4647 | 107 | 138 | 245 | Aramid | Inorganic particle +acrylic binder | EC/EMC/DMC -20/10/70 | ○ | 14 |
| Comparative Example 5 | 1904 | 1897 | 3801 | 85 | 97 | 182 | Aramid | Inorganic particle +acrylic binder | EC/EMC/DMC =10/10/80 | X | 30 |
| Comparative Example 6 | 2520 | 2127 | 4647 | 107 | 138 | 245 | Aramid | Inorganic particle +acrylic binder | EC/PC/EP/PP =10/15/30/45 | ○ | 20 |

In Table 1 above, an adhesive strength of 0.5 gf/mm or more is evaluated as ○, and an adhesive strength of less than 0.5 gf/mm is evaluated as X.

In Table 1 above, PC: propylene carbonate, EP: ethyl propionate, PP: propyl propionate

As in Table 1 above, collision characteristics of the rechargeable lithium batteries of the examples were improved.

On the other hand, the collision characteristics of the rechargeable lithium batteries of the comparative examples were not desirable.

According to one example embodiment, by providing a rechargeable battery and a battery pack including the rechargeable battery with improved collision characteristics and improved adhesive strength between a separator and a pole plate, reliability of a rechargeable lithium battery can be improved.

Although example embodiments of the present disclosure have been described above, the present disclosure is not limited thereto and may be modified in any form within the scope of the claims, the detailed description of the present disclosure, and the accompanying drawings, and the modifications also fall within the scope of the present disclosure.

## Claims

1. A rechargeable battery comprising:
a case having an open portion;
an electrode assembly and an electrolyte accommodated in the case; and
a cap-up disposed in the open portion,
wherein the electrode assembly includes a first electrode plate, a second electrode plate, and a separator between the first electrode plate and the second electrode plate,
the separator includes a base, and a coating layer located on at least one surface of the base,
a sum of machine direction (MD) elongation rate and transverse direction (TD) elongation rate of the base is 200% or less, and a sum of MD tensile strength and TD tensile strength of the base is 4,000 kgf/cm² or less,
the coating layer includes a binder, and the binder includes one or more of an aramid-based resin and an acrylic resin, and
the electrolyte includes 20 vol% or more of ethyl propionate or ethylene carbonate.

2. The rechargeable battery of claim 1, wherein the MD tensile strength of the base is higher than the TD tensile strength.

3. The rechargeable battery of claim 1 or 2, wherein:
the MD tensile strength ranges from 1,500 kgf/cm² to 3,000 kgf/cm², and
the TD tensile strength ranges from 500 kgf/cm² to 2,000 kgf/cm².

4. The rechargeable battery of claim 1, wherein the TD elongation rate of the base is higher than the MD elongation rate.

5. The rechargeable battery of any one of claims 1 to 4, wherein:
the MD elongation rate ranges from 5% to 100%, and
the TD elongation rate ranges from 20% to 180%.

6. The rechargeable battery of any one of claims 1 to 5, wherein the base comprises a polyolefin-based base having porosity.

7. The rechargeable battery of claim 6, wherein the polyolefin-based base comprises a polyolefin-based resin having a weight-average molecular weight of 600,000 g/mol or more.

8. The rechargeable battery of claim 6 or 7, wherein the polyolefin-based base comprises a polyolefin-based resin having a melting temperature (Tm) ranging from 130 °C to 140 °C.

9. The rechargeable battery of any one of claims 1 to 8, wherein the aramid-based resin comprises a meta- or para-aramid-based resin.

10. The rechargeable battery of any one of claims 1 to 9, wherein the acrylic resin has a glass transition temperature ranging from 70 °C to 100 °C.

11. The rechargeable battery of any one of claims 1 to 10, wherein an adhesive strength of the separator to one of the first electrode plate and the second electrode plate is in a range of 0.5 gf/mm or more.

12. The rechargeable battery of any one of claims 1 to 11, wherein the electrolyte comprises:
10 vol% to 30 vol% of ethylene carbonate (EC);
10 vol% to 30 vol% of propylene carbonate (PC);
20 vol% to 40 vol% of ethyl propionate (EP); and
30 vol% to 60 vol% of propyl propionate (PP).

13. The rechargeable battery of any one of claims 1 to 12, wherein the electrolyte comprises:
20 vol% to 30 vol% of ethylene carbonate (EC);
10 vol% to 40 vol% of ethyl methyl carbonate (EMC); and
30 vol% to 70 vol% of dimethyl carbonate (DMC).

14. The rechargeable battery of any one of claims 1 to 13, wherein the coating layer further comprises one or more of a filler and polyethylene-based wax, preferably wherein the filler has an average particle diameter D50 ranging from 20 nm to 200 nm, optionally, wherein the filler comprises spherical alumina.

15. The rechargeable battery of any one of claims 1 to 14, wherein the coating layer comprises an adhesive layer including one or more of the aramid-based resin and the acrylic resin.

16. The rechargeable battery of any one of claims 1 to 15, wherein the coating layer comprises:
a heat-resistant layer including a filler and the binder; and
an adhesive layer located on the heat-resistant layer and including one or more of the aramid-based resin and the acrylic resin.
